# EUROPEAN PATENT APPLICATION

(11) **EP 4 800 567 A1**
(43) Date of publication of application: **02.09.2026**
(21) Application number: 24922688.7
(22) Date of filing: 09.12.2024
(51) Int. Cl.: G06F 16/188

(54) **FILE DATA SHARING METHOD AND APPARATUS FOR HOST SYSTEM, AND MEDIUM, PROGRAM PRODUCT AND TERMINAL**

(71) Applicant: VeriSilicon Microelectronics (Shanghai) Co., Ltd., Shanghai 201203 (CN); VeriSilicon Microelectronics (Beijing) Co., Ltd., Beijing 100193 (CN)
(72) Inventor: ZHANG, Yang, Shanghai 201203 (CN); LIN, Tao, Shanghai 201203 (CN)
(74) Representative: Canzler & Bergmeier Patentanwälte Partnerschaft mbB
(86) International application number: PCT/CN2024/137831
(87) International publication number: WO 2026/123162

(57) **Abstract**

A method and device for file data sharing in a host system, a medium, a program product, and a terminal are provided, enabling upper-layer software modules to efficiently access the host file through the virtual file device. The virtual file device achieves driver access through the interface of the register, which records information related to access operations, including operation type and operands. Upon receiving a file access request, the guest operating system uses the corresponding API to convert this request into a specific access operation sequence designed for the virtual file device, enabling the guest operating system to execute tasks as required and access the host file seamlessly. This approach enables efficient file access in environments lacking traditional file systems, particularly on virtual devices without network connectivity, eliminating reliance on conventional network protocols, greatly enhancing data transmission performance and efficiency, while ensuring smooth file access in network-free settings.

## Description

### FIELD OF THE INVENTION

The present disclosure relates to the technical field of virtual machines, and in particular, to a method and a device for file data sharing in a host system, a medium, a program product, and a terminal.

### BACKGROUND OF THE INVENTION

"Guest systems" refer to user-specific applications and services that operate in virtual environments or cloud computing platforms. These systems typically need to exchange data with their host systems, which are physical or virtual machine infrastructures. The primary purpose of such data exchange is to ensure that guest systems can access necessary resources, share files, or synchronize information to improve overall operational efficiency. Currently, technologies for file data exchange between guest systems and host systems include using virtual file systems and network communication.

However, applying these technologies in certain environments can be challenging due to some guest systems lacking comprehensive system support or compatibility. Moreover, when using network communication for data exchange, limitations like network bandwidth and latency can result in low data exchange efficiency, negatively affecting the guest system's performance. On the other hand, to enhance file access efficiency between guest and host systems, solutions involving paravirtulization methods to establish data channels have been developed. Nevertheless, the technical complexity of this approach presents challenges in practice. Paravirtulization often requires in-depth customization at the underlying abstraction layer, which usually involves modifying the operating system, therefore leading to high implementation costs, long development cycles, and the need for substantial technical support for development and maintenance.

### SUMMARY OF THE INVENTION

The present disclosure provides a method and a device for file data sharing in a host system, a medium, a program product, and a terminal, which address challenges such as compatibility issues between guest systems and host systems, inefficiencies in network data exchange, and the complexity and high costs associated with implementing paravirtulization solutions.

A first embodiment of the present disclosure provides a method for file data sharing in a host system, comprising steps S11-S13. Step S11 comprises: deploying a virtual machine in the host system, and deploying a guest operating system in the virtual machine. Step S12 comprises: after receiving a file access instruction, converting the file access instruction into an access operation sequence by a virtual file device driver in the guest operating system, and writing the access operation sequence into a virtual file device in the virtual machine. Step S13 comprises: performing, by the virtual machine, a corresponding file sharing operation on a host file in the host system based on the access operation sequence.

In some examples of the present disclosure, step S11 further comprises: deploying, by the host system, the virtual file device in the virtual machine, and installing the virtual file device driver in the guest operating system.

In some examples of the present disclosure, writing the access operation sequence into the virtual machine through the guest operating system comprises: sending, by the guest operating system through an interface of a register in the virtual file device, the access operation sequence to the virtual file device, and storing the access operation sequence into the register.

In some examples of the present disclosure, after the access operation sequence is written into the virtual machine, the method further comprises: identifying, by the virtual file device, the access operation sequence stored in the register to extract an access type of the host system; and calling, by the virtual file device, a corresponding one of APIs through a predefined protocol based on the access type of the host system, to establish a connection with the host system.

In some examples of the present disclosure, the access type comprises one or more of a fetch operation, a write operation, an add operation, a delete operation, a permission modification operation, a movement, and a rename operation.

In some examples of the present disclosure, converting the file access instruction into the access operation sequence comprises: converting the file access instruction into the access operation sequence matching the host system by a file access API disposed within the virtual file device driver.

In some examples of the present disclosure, converting the file access instruction into the access operation sequence matching the host system comprises: parsing the file access instruction to generate an access type, a file path and a data block size; performing a structuralization process on the access type, the file path and the data block size, to generate a structured instruction; sending the structured instruction to the file access API to generate operation commands of sub-operations; and generating the access operation sequence based on the operation commands.

In some examples of the present disclosure, the method further comprises: before the guest operating system and the host system execute their first file sharing operation, performing the corresponding file sharing operation on a target file in the host system through the virtual file device in the virtual machine, which is performed by: obtaining, by the virtual file device, a handle file from the host system, and sending the handle file to the guest operating system; and performing, by the guest operating system, subsequent file sharing operations with the host system based on the handle file.

In some examples of the present disclosure, the handle file is an identifier for identifying and managing the host file.

In some examples of the present disclosure, step S11 further comprises: installing a virtualization platform in the host system, creating the virtual machine in the virtualization platform, and performing resource configuration; and deploying the guest operating system in the virtual machine using ISO mirroring.

In some examples of the present disclosure, the virtualization platform comprises one of a KVM virtualization software, a VMware virtualization software, and a VirtualBox virtualization software.

A second embodiment of the present disclosure provides a device for file data sharing in a host system, comprising a guest operating system, a virtual machine, and the host system. The guest operating system is configured to receive a file access instruction, convert the file access instruction into an access operation sequence, and write the access operation sequence into a virtual machine. The virtual machine is configured to perform a corresponding file sharing operation on a host file in the host system based on the access operation sequence. The host system is configured to deploy the virtual machine and deploy a guest operating system in the virtual machine.

A third embodiment of the present disclosure provides a non-transitory computer-readable storage medium, which stores a computer program. The method as described in the examples of the first embodiment of the present disclosure is implemented when the computer program is executed by a processor.

A fourth embodiment of the present disclosure provides a computer program product having computer program codes stored thereon. The computer program codes run on a computer to implement the method as described in the examples of the first embodiment of the present disclosure.

A fifth embodiment of the present disclosure provides an electronic terminal, comprising a memory, a processor, and a computer program stored on the memory. The computer program is executed by the processor to implement the method as described in the examples of the first embodiment of the present disclosure.

The presently disclosed method, device, medium, program product, and terminal offer several key advantages. This method enables file access in environments without a file system, allowing users to access host system files even in the absence of traditional file systems. The present disclosure introduces an efficient file access approach, significantly improving the performance and efficiency of virtual systems accessing host files, making it especially suitable for virtual devices operating without network connectivity. This method also eliminates dependency on network protocols found in conventional methods by enabling direct access from the guest operating system to the host system through critical information, which addresses the limitations of slow speeds and extensive data copying in traditional approaches, greatly enhancing file-sharing capabilities between virtual and host systems.

### BRIEF DESCRIPTION OF DRAWINGS

FIG. 1 is a flowchart of a method for file data sharing in a host system according to an embodiment of the present disclosure.
FIG. 2 is schematic block diagram of a device for file data sharing in the host system according to an embodiment of the present disclosure.
FIG. 3 is a schematic block diagram of an electronic terminal according to an embodiment of the present disclosure.

### DETAILED DESCRIPTION OF THE INVENTION

The embodiments of the present disclosure will be described below. Those skilled can easily understand other advantages and effects of the present disclosure according to contents disclosed by the specification. The present disclosure can also be implemented or applied through other different specific embodiments. Various details in this specification can also be modified or changed based on different viewpoints and disclosures without departing from the spirit of the present disclosure. It should be noted that the following embodiments and features of the following embodiments can be combined with each other if no conflict will result.

Some terms and concepts involved in the present disclosure are explained as follows:
<1> Executable Program: A set of instructions designed to run on specific computer hardware systems to perform particular functions. Executable programs are typically written in machine code or an intermediate language. Once compiled or interpreted, the executable programs can be directly loaded and executed by the operating system to handle applications, services, or system tasks.
<2> Driver: A specialized type of executable program responsible for managing and controlling the operations of computer hardware devices. Drivers act as intermediaries between the operating system and hardware, enabling seamless communication through standardized interfaces and ensuring optimal hardware functionality.
<3> Device: A hardware component designed for specific purposes, controlled by electromagnetic signals or other physical processes. Devices can be categorized as input devices (e.g., keyboard, mouse), output devices (e.g., monitor, printer), or storage devices (e.g., hard drive, flash drive).
<4> Virtualization: A technology that uses a software abstraction layer to optimize and manage access to hardware resources. Virtualization allows multiple operating systems to run simultaneously on a single hardware platform, maximizing resource utilization and improving hardware efficiency and flexibility.
<5> Full Virtualization: A virtualization technique where the guest operating system runs within a virtual machine completely independent of the underlying hardware and its abstraction layer. This approach provides a fully virtualized hardware environment, allowing the guest operating system to run unmodified, ensuring broad compatibility with different operating systems.
<6> Paravirtualization: A virtualization method where the guest operating system is partially separated from the underlying hardware and abstraction layer. In this setup, the guest operating system requires some modifications to collaborate efficiently with the virtualization layer, leading to better performance and resource optimization.
<7> Virtual Device: A software-based program or component that simulates the functionality of physical hardware. Virtual devices mimic the interface and behavior of real hardware, enabling applications to interact seamlessly without worrying about the underlying physical implementation.
<8> Register: A high-speed storage unit located within the central processing unit (CPU), designed for storing and exchanging information, instructions, or state data. Registers accelerate data processing as they offer significantly faster access compared to other storage types like Random Access Memory (RAM).
<9> File: A collection of data stored in a specific format on a computer, typically organized within a directory structure. Files can contain various types of data, such as text, images, audio, or video, and can be accessed or managed by users and applications.
<10> Virtual File: A collection of data stored on specific virtual devices, accessible through a virtual layer by users or applications. Virtual files are not directly tied to physical storage, offering a flexible and efficient way to manage data.
<11> Virtual System: A composite system composed of virtual devices and executable programs that operate within them. Virtual systems function independently with their own resource management and operating environment, allowing multiple systems to run concurrently on the same physical hardware.
<12> Guest System: A virtual system consisting of virtual machines, and guest virtual operating systems and other software modules running on the virtual machines. Guest systems operate within the environment provided by host systems, utilizing their hardware resources and services.
<13> Host System: A computer system comprising physical hardware, and a host operating system and associated software modules running on the physical hardware. Host systems provide the necessary resources and environment for guest systems to operate, managing the allocation and scheduling of virtual resources to ensure efficient performance.
<14> Guest Virtual Operating System: An operating system created through virtualization technology, running within a guest system. The guest virtual operating system operates within the environment provided by the host system and leverages the hardware resources and services offered by the host. The host system acts as the infrastructure, comprising the physical machine or operating system that provides resources. Virtual machines, created on the host system, serve as virtualization environments, with each virtual machine capable of running its own independent operating system. The guest operating system refers to the operating system that operates within the virtual machine. The guest system refers to the applications and services operating within the guest operating system.

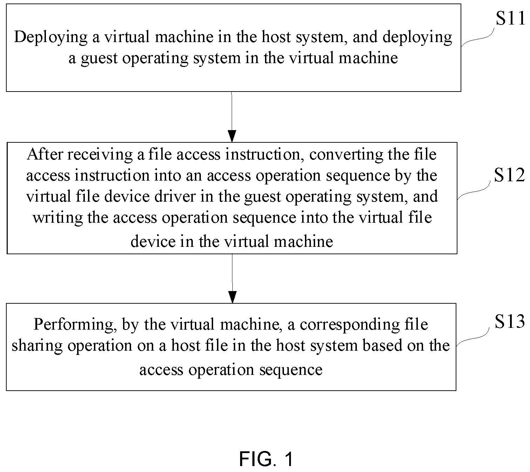

For ease of understanding, the embodiments of the present disclosure will be described in detail below in connection with FIG. 1. FIG. 1 is a flowchart of a method for file data sharing in a host system according to an embodiment of the present disclosure. The presently disclosed method comprises steps S11-S13.

Step S11 comprises: deploying a virtual machine in the host system, and deploying a guest operating system in the virtual machine.

As an example, the virtual machine is deployed in the host system by: installing a virtualization platform in the host system, creating the virtual machine in the virtualization platform using command-line tools or a graphical interface, and configuring resources such as CPU, memory, and storage. The guest operating system is then deployed in the virtual machine using International Organization for Standardization (ISO) mirroring. Following this, process management tools are installed and configured to monitor applications within the virtual machine. Once installation is complete, the process management service is activated, and the applications are tested to ensure proper functionality. Finally, system logs and application statuses are monitored regularly, with resources adjusted as needed to maintain optimal performance and stability. The virtualization platform comprises software such as Kernel-based Virtual Machine (KVM), VMware, and VirtualBox. KVM is an open-source virtualization technology integrated into the Linux kernel, supporting various operating systems and hardware virtualization extensions. VMware is a commercial virtualization software offering products like VMware Workstation and vSphere, featuring advanced functionalities such as virtual machine management, snapshots, and cloning. VirtualBox, another open-source virtualization platform, provides a user-friendly interface and supports a wide range of operating systems.

The presently disclosed method addresses file sharing between the host system and multiple guest systems running thereon. Each of the guest systems is configured with a virtual file device, and a drive program of the virtual file device enables upper-layer software modules to access the host system's files, thus facilitating resource sharing and management. This architecture greatly enhances file access efficiency and allows guest systems to flexibly utilize the storage resources of the host system.

As an example, step S11 further comprises: deploying, by the host system, the virtual file device in the virtual machine, and installing a virtual file device driver in the guest operating system.

Specifically, deploying the virtual file device in the virtual machine by the host system comprises: creating a virtual storage volume on the host system, and mapping the virtual storage volume to the virtual machine through the virtualization platform, which is performed by: selecting a target virtual machine in a virtualization management tool, configuring attributes of a virtual disk, and starting the virtual machine to recognize the created virtual storage volume. Specifically, installing the virtual file device driver in the guest operating system comprises: obtaining a corresponding one of the drive programs within the virtual machine, and installing said drive through a package management tool or an installation utility of the drive programs of the guest operating system. Once installed, said drive program is loaded into the guest operating system, to recognize and manage the corresponding virtual file device. The package management tool is specific to the guest operating system running on the virtual machine. As an example, when the guest operating system is Linux, tools like apt or yum can be used for drive program installation.

The virtual file device acts as an abstraction layer for file storage and management in a virtual environment, allowing the virtual machine to interact with virtual storage resources as if accessing a physical file system. The virtual file device driver translates file system calls of the guest operating system into operations that the virtual file device can process, enabling effective communication between the virtual machine and the virtual storage.

It is worth noting that, in the present disclosure, the introduction of the virtual file device and the virtual file device driver innovatively links the host system's storage resources with the virtual machine, enabling seamless file sharing between the guest operating system and the host system. By creating and mapping the virtual storage volume in the virtualization platform, the virtual file device enables the virtual machine to access the host system storage as if accessing a physical file system. Additionally, the virtual file device driver in the guest operating system enables communication with the virtual file device, ensuring efficient and reliable data exchange between the virtual machine and the host system, thereby significantly enhancing the flexibility and scalability of data management in virtual environments.

Step S12 comprises: after receiving a file access instruction, converting the file access instruction into an access operation sequence by the virtual file device driver in the guest operating system, and writing the access operation sequence into the virtual file device in the virtual machine.

As an example, the virtual file device achieves driver access through an interface of a register in the virtual file device, the register records information related to access operations, including operation type and operands. The drive program provides a set of Application Programming Interfaces (APIs) to convert file access operations into specific operation sequences for the virtual file device. Finally, executable programs in the guest system can utilize these APIs as needed to access the host system's files.

As an example, writing the access operation sequence into the virtual machine through the guest operating system comprises: sending, by the guest operating system through the interface of the register in the virtual file device, the access operation sequence to the virtual file device, and storing the access operation sequence into the register.

When the guest operating system starts, the virtual file device is initialized through a drive file and registered within the guest operating system, at which time, the interface of the register is recognized by the guest operating system. Based on application requirements, the guest operating system generates a series of file access operations such as read, write, and delete. These file access operations are serialized into the access operation sequence for batch processing. The guest operating system sends the access operation sequence to the virtual file device using the interface of the register. The access operation sequence is then stored in the register. The register serves as a memory unit for temporarily storing operation commands to support subsequent execution operations. The virtual file device retrieves the access operation sequence from the register and performs the corresponding operations through interaction with the host system. The virtual file device translates the access operation sequence into commands that the host system can understand and forwards the commands to the host's storage. Upon completing the file-sharing operations, the virtual file device sends an operation result back to the guest operating system, including success or failure status and any returned data. This operation result is fed back to the guest operating system through the interface of the register for further processing.

As an example, converting the file access instruction into the access operation sequence comprises: converting the file access instruction into the access operation sequence matching the host system by a file access API disposed within the virtual file device driver.

Specifically, the guest operating system first receives a file access instruction from an application, such as a request of file reading named "example.txt." The file access instruction contains detailed information such as the operation type (read), file path (/data/example.txt), and the requested data block size (4096 bytes). The guest operating system then passes the file access instruction to the file access API within the virtual file device driver (e.g., an API named VFS_ReadFile) for processing. Upon receiving the file access instruction, the file access API first parses the operation type and identifies this instruction as a read operation. Next, the file access API parses the file path in the file access instruction to locate a storage location of a target file named "/data/example.txt." Once the file path is determined, the VFS_ReadFile API divides the read operation into multiple sub-operations based on the requested block size. For example, if the target file is 12,288 bytes in size, the VFS_ReadFile API splits the read operation into three sub-operations: READ /data/example.txt 0 4096, READ /data/example.txt 4096 4096, and READ /data/example.txt 8192 4096, continuing until the file read is complete. Each of the sub-operations specifies a starting position for reading and data amount to be read. After completing these steps, the VFS_ReadFile API returns the generated access operation sequence in a predefined structure (such as an array or linked list) to the guest operating system for further use, ensuring effective communication and data interaction with the host system.

Step S13 comprises: performing, by the virtual machine, a corresponding file sharing operation on a host file in the host system based on the access operation sequence.

As an example, after the access operation sequence is written into the virtual machine, the method further comprises: identifying, by the virtual file device, the access operation sequence stored in the register to extract an access type of the host system; and calling, by the virtual file device, a corresponding one of APIs through a predefined protocol based on the access type of the host system, to establish a connection with the host system.

In the above scenario, the virtual file device's register serves as temporary storage for the functions access operation sequence. Each file operation initiated by the guest operating system generates a specific record, such as the operation type, target file, and operation timestamp. This data is written into the register for future processing. Once the access operation sequence is recorded, the virtual file device parses and analyzes the date to determine the access type. This approach often involves processing structured data formats like JavaScript Object Notation (JSON), eXtensible Markup Language (XML), or similar formats to retrieve the operation type (e.g., read, write), file path, and other relevant details. Advanced data processing algorithms are used to identify access patterns stored in the register. The system can apply pattern recognition or data analysis techniques to analyze historical operation logs and determine access behavior. For example, if repeated read operations are detected for a particular file, the system marks this particular file as a high-frequency access file. Operation types in the access operation sequence include, but are not limited to, a fetch operation, a write operation, an add operation, a delete operation, a permission modification operation, a movement, and a rename operation.

As an example, the method further comprises: before the guest operating system and the host system execute their first file sharing operation, performing the corresponding file sharing operation on the target file in the host system through the virtual file device in the virtual machine, which is performed by: obtaining, by the virtual file device, a handle file from the host system, and sending the handle file to the guest operating system; and performing, by the guest operating system, subsequent file sharing operations with the host system based on the handle file.

Specifically, the virtual file device ensures successful file sharing by first obtaining the handle file for the target file from the host system. The handle file serves as a unique identifier for representing and managing the file. The virtual file device then sends the handle file to the guest operating system. Once received, the guest operating system utilizes this handle file to interact with the host system and perform file-sharing operations. This approach ensures proper access to and operation of the target file in the host system while maintaining the reliability and effectiveness of the file-sharing process.

The handle file refers to the unique identifier assigned by the guest operating system when a file is opened, so as to track and manage file-related operations such as reading, writing, or closing the file. Instead of directly interacting with the underlying storage device, operations are executed via the handle file by issuing commands to the guest operating system, which not only simplifies the file operation process but also ensures efficient resource management and protection, minimizing the risk of file misuse or operational conflicts.

It should be noted that, in the present disclosure, the terms "exemplary" or "for example" indicate instances, illustrations, or explanations. Any embodiment or design described as "exemplary" or "for example" should not be seen as preferred or superior to other embodiments or designs. These terms are simply used to present related concepts.

In the present disclosure, "at least one" means one or more, and "multiple" means two or more. "And/or" describes relationships between related items, indicating three possible scenarios. For example, "A and/or B" can mean A alone, A and B together, or B alone, where A and B can be singular or plural. The character "/" generally signifies an "or" relationship between associated items. "The following at least one (item)" or similar phrases refer to any combination of these items, including any single item or combination of multiple items. For example, "at least one of a, b, and c" can mean a, b, c, a and b, a and c, b and c, or a, b, and c, where a, b, and c can be singular or plural.

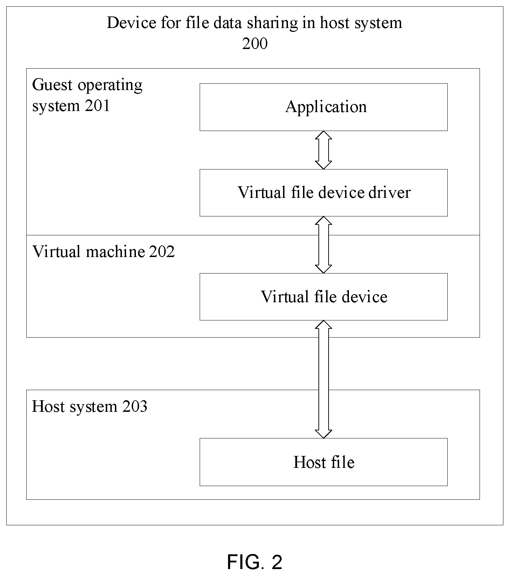

FIG. 2 is schematic block diagram of a device 200 for file data sharing in the host system according to an embodiment of the present disclosure. As shown in FIG. 2, the device 200 for file data sharing in the host system comprises a guest operating system 201, a virtual machine 202, and the host system 203.

The guest operating system 201 is configured to receive a file access instruction, convert the file access instruction into an access operation sequence, and write the access operation sequence into the virtual machine 202.

The virtual machine 202 is configured to perform a corresponding file sharing operation on a host file in the host system based on the access operation sequence.

The virtual machine 202 is deployed in the host system 203, and the guest operating system 201 is deployed in the virtual machine 202.

It should be understood that the specific processes performed by each module have been detailed in the previous method embodiments and will not be repeated here for brevity.

Additionally, the division of modules in the present disclosure is illustrative and represents one logical division of functions. Different divisions could be used in actual implementation. Furthermore, the functional modules in each embodiment of the present disclosure can be integrated into a single processor, exist separately, or be integrated into one module from two or more modules. The integrated modules can be implemented in hardware or as software functional modules.

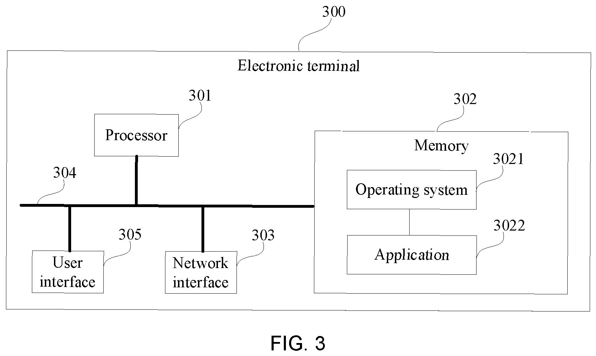

FIG. 3 is a schematic block diagram of an electronic terminal 300 according to an embodiment of the present disclosure. As shown in FIG. 3, the electronic terminal 300 comprises at least one processor 301, a memory 302, at least one network interface 303, and a user interface 305. Various components of the electronic terminal 300 are coupled together through a bus system 304. It should be understood that the bus system 304 is configured to implement connection and communication between these components. In addition to a data bus, the bus system 304 further comprises a power bus, a control bus, and a status signal bus. However, for simplicity, the multiple buses are marked as the bus system 304 in FIG. 3.

The user interface 305 may include a display, keyboard, mouse, trackball, stylus, buttons, touchpad, or touchscreen, among other input devices.

The memory 302 can be either volatile or non-volatile memory, or a combination of both. Non-volatile memory can include read-only memory (ROM), programmable read-only memory (PROM), used as external high-speed cache. Examples of RAM include static random-access memory (SRAM) and synchronous static random-access memory (SSRAM). The memory 302 of the present disclosure includes, but is not limited to, these types and any other suitable memory types.

The memory 302 stores various types of data to support the operation of the electronic terminal 300. Examples include any executable programs such as an operating system 3021 and an application 3022. The operating system 3021 comprises various system programs like the framework layer, core libraries, and drivers to handle basic functions and hardware tasks. The application 3022 can comprise programs like media players and browsers for different services. The method of the present disclosure can be part of the application 3022.

The method of the present disclosure can run on or be executed by the processor 301. The processor 301 could be an integrated circuit chip with signal processing capabilities. In the implementation process, each operation of the above method may be completed by an integrated logic circuit of hardware in the processor 301 or an instruction in a form of software. The processor 301 can be a general-purpose processor, digital signal processor (DSP), or other programmable logic devices, discrete gates, transistor logic devices, or discrete hardware components. The processor 301 can implement or execute the methods, steps, and logic diagrams disclosed in the present disclosure. The general-purpose processor can be a microprocessor or any conventional processor. The steps of the calibration method of the present disclosure can be executed directly by a hardware decoder processor, or by a combination of hardware and software modules. Software modules can reside in a storage medium, which is part of the memory. The processor reads the information from the memory and, together with its hardware, executes the steps of the described method.

In an exemplary embodiment, the electronic terminal 300 comprises one or more of application-specific integrated circuits (ASICs), DSPs, programmable logic devices (PLDs), and complex programmable logic devices (CPLDs), to perform the described method.

The present disclosure further provides a computer program product having computer program codes stored thereon. The computer program codes run on a computer to implement the method as described in the previous method embodiments.

The present disclosure further provides a non-transitory computer-readable storage medium storing a computer program. The computer program is executed by a processor/computer to implement the method as described in the previous method embodiments.

In the present disclosure, the terms "component," "module," "system," etc., refer to computer-related entities that can be hardware, firmware, software, a combination of these, or software in execution. For example, a component can be a process running on a processor, a processor itself, an object, an executable file, an executing thread, a program, or a computer. Both an application running on a computing device and the computing device itself can be considered components. One or more components can reside within a process or a thread of execution, and a component can be located on one computer or distributed across two or more computers. These components can execute from various computer-readable media that store different data structures. For instance, components can communicate via local and/or remote processes based on signals with one or more data packets (e.g., data from components interacting with a local system, distributed system, or another component over a network like the Internet).

Those skilled in the art will recognize that the various illustrative logical blocks and steps described in the embodiments can be implemented using electronic hardware, computer software, or a combination of both. Whether these functions are executed by hardware or software depends on the specific application and design constraints of the technical solution. Professional technicians can use different methods to implement the functions described for each specific situation, but such implementation should not be considered beyond the scope of the present disclosure.

For brevity, professionals in the field will recognize that the specific operational processes of the systems, devices, and units described can be referenced in the corresponding processes of the previous method embodiments.

In the several embodiments proposed in the present disclosure, the disclosed systems, devices, and methods can be implemented in other ways. For example, the embodiments of devices described above are only illustrative, and the division of units is only a logical functional division. In actual implementation, there may be other division methods, such as multiple units or components can be combined or integrated into another system, or some features can be ignored or not executed. Here, the coupling or direct coupling or communication connection between each other can be indirect coupling or communication connection through some interfaces, devices, or units, and can be electrical connection, mechanical connection, or other connections.

The units shown as separate components can be physically separated or not. The components shown as units can be physical modules or not. That is, they can be located in one place, or they can also be distributed to multiple network units. Some or all of the units can be selected as needed to achieve the purpose of the embodiment.

Additionally, in the present disclosure, each functional unit can be integrated into one processing module. Each functional unit can exist physically separately, or two or more units can be integrated into one unit.

In the present disclosure, the functions of each unit can be implemented entirely or partially through software, hardware, firmware, or any combination of these. When implemented via software, it can be realized entirely or partially as a computer program product. The computer program product comprises one or more computer instructions. When these instructions are loaded and executed on a computer, they generate all or part of the processes or functions described in the present disclosure. The computer could be a general-purpose computer, a specialized computer, a computer network, or other programmable devices. The computer instructions can be stored on a non-transitory computer-readable storage medium or transmitted from one medium to another, such as from a website, computer, server, or data center to another via wired (e.g., coaxial cable, optical fiber, digital subscriber line (DSL)) or wireless (e.g., infrared, wireless, microwave) means. The above storage medium can be any available medium that can be accessed by a computer, or a data storage device that integrates one or more available media, such as a server, a data center, etc. The available medium can be a magnetic medium (such as a floppy disk, a hard disk, or a magnetic tape), an optical medium (such as a digital video disc (DVD)), or a semiconductor medium (such as a solid state disk (SSD)), etc.

The described functions may be stored in the computer readable storage medium if implemented as software functional units and sold or used as standalone products. It is understood that the technical solution of the present disclosure, or the part of the technical solution that improves upon the prior art, may be embodied in the form of a software product that is stored in a storage medium and includes a number of instructions to cause a computer (which may be a personal computer, a server, or a network device, etc.) to perform all or some of the steps of a method described in various embodiments of the present disclosure. The foregoing storage medium includes various medium that may store program codes, such as USB drives, portable hard drives, Read-Only Memories (ROMs), Random Access Memories (RAMs), magnetic disks, or optical disks.

The above embodiments are merely illustrative. Any changes or replacements that can be easily thought of by those skilled in the art within the technical scope disclosed in the present disclosure should be included in the scope of the present disclosure. Therefore, the scope of the present disclosure is subject to the protection scope defined in claims.

In summary, the presently disclosed method, device, medium, program product, and terminal, enabling upper-layer software modules to efficiently access the host file through the virtual file device. The virtual file device achieves driver access through the interface of the register, which records information related to access operations, including operation type and operands. Upon receiving a file access request, the guest operating system uses the corresponding API to convert this request into a specific access operation sequence designed for the virtual file device, which enables the guest operating system to execute tasks as required and access the host file seamlessly. This approach enables efficient file access in environments lacking traditional file systems, particularly on virtual devices without network connectivity, eliminating reliance on conventional network protocols, greatly enhancing data transmission performance and efficiency, while ensuring smooth file access in network-free settings. Therefore, the present disclosure effectively overcomes various shortcomings of the prior art and has a high industrial value.

The above-mentioned embodiments are merely illustrative of the principle and effects of the present disclosure instead of limiting the present disclosure. Modifications or variations of the above-described embodiments may be made by those skilled in the art without departing from the spirit and scope of the present disclosure. Therefore, all equivalent modifications or changes made by those who have common knowledge in the art without departing from the spirit and technical concept disclosed by the present disclosure shall be still covered by the claims of the present disclosure.

## Claims

1. A method for file data sharing in a host system, comprising:
S11: deploying a virtual machine in the host system, and deploying a guest operating system in the virtual machine;
S12: after receiving a file access instruction, converting the file access instruction into an access operation sequence by a virtual file device driver in the guest operating system, and writing the access operation sequence into a virtual file device in the virtual machine; and
S13: performing, by the virtual machine, a corresponding file sharing operation on a host file in the host system based on the access operation sequence.

2. The method according to claim 1, wherein S11 further comprises:
deploying, by the host system, the virtual file device in the virtual machine, and installing the virtual file device driver in the guest operating system.

3. The method according to claim 2, wherein writing the access operation sequence into the virtual machine through the guest operating system comprises: sending, by the guest operating system through an interface of a register in the virtual file device, the access operation sequence to the virtual file device, and storing the access operation sequence into the register.

4. The method according to claim 3, wherein after the access operation sequence is written into the virtual machine, the method further comprises:
identifying, by the virtual file device, the access operation sequence stored in the register to extract an access type of the host system; and
calling, by the virtual file device, a corresponding one of APIs through a predefined protocol based on the access type of the host system, to establish a connection with the host system.

5. The method according to claim 4, wherein the access type comprises one or more of a fetch operation, a write operation, an add operation, a delete operation, a permission modification operation, a movement, and a rename operation.

6. The method according to claim 2, wherein converting the file access instruction into the access operation sequence comprises: converting the file access instruction into the access operation sequence matching the host system by a file access API disposed within the virtual file device driver.

7. The method according to claim 6, wherein converting the file access instruction into the access operation sequence matching the host system comprises:
parsing the file access instruction to generate an access type, a file path and a data block size;
performing a structuralization process on the access type, the file path and the data block size, to generate a structured instruction;
sending the structured instruction to the file access API, to generate operation commands of sub-operations; and
generating the access operation sequence based on the operation commands.

8. The method according to claim 2, wherein the method further comprises: before the guest operating system and the host system execute their first file sharing operation, performing the corresponding file sharing operation on a target file in the host system through the virtual file device in the virtual machine, which is performed by:
obtaining, by the virtual file device, a handle file from the host system, and sending the handle file to the guest operating system; and
performing, by the guest operating system, subsequent file sharing operations with the host system based on the handle file.

9. The method according to claim 8, wherein the handle file is an identifier for identifying and managing the host file.

10. The method according to claim 1, wherein S11 further comprises:
installing a virtualization platform in the host system, creating the virtual machine in the virtualization platform, and performing resource configuration; and
deploying the guest operating system in the virtual machine using ISO mirroring.

11. The method according to claim 10, wherein the virtualization platform comprises one of a KVM virtualization software, a VMware virtualization software, and a VirtualBox virtualization software.

12. A device for file data sharing in a host system, comprising:
a guest operating system, configured to receive a file access instruction, convert the file access instruction into an access operation sequence, and write the access operation sequence into a virtual machine;
a virtual machine, configured to perform a corresponding file sharing operation on a host file in the host system based on the access operation sequence; and
the host system, configured to deploy the virtual machine and deploy a guest operating system in the virtual machine.

13. A non-transitory computer-readable storage medium, which stores a computer program, wherein the method according to any one of claims 1-11 is implemented when the computer program is executed by a processor.

14. A computer program product having computer program codes stored thereon, wherein the computer program codes run on a computer to implement the method according to any one of claims 1-11.

15. An electronic terminal, comprising a memory, a processor, and a computer program stored on the memory, wherein the computer program is executed by the processor to implement the method according to any one of claims 1-11.
